# EUROPEAN PATENT APPLICATION

(11) **EP 4 523 951 A1**
(43) Date of publication of application: **19.03.2025**
(21) Application number: 23803375.7
(22) Date of filing: 20.04.2023
(51) Int. Cl.: B60L 53/12, B60G 17/00

(54) **VEHICLE HEIGHT ADJUSTMENT METHOD AND VEHICLE HEIGHT ADJUSTMENT SYSTEM**

(30) Priority: 09.05.2022 JP 2022077071
(71) Applicant: THK CO., LTD., Minato-ku Tokyo 108-8506 (JP)
(72) Inventor: NISHIDE Tetsuhiro, Tokyo 108-8506 (JP); KAMADA Shinobu, Tokyo 108-8506 (JP); KANESHIGE Hiroshi, Tokyo 108-8506 (JP); MINAMI Toshiro, Tokyo 108-8506 (JP); SOGA Arina, Tokyo 108-8506 (JP)
(74) Representative: Prinz & Partner mbB
(86) International application number: PCT/JP2023/015750
(87) International publication number: WO 2023/218893

(57) **Abstract**

A vehicle height adjustment method and a vehicle height adjustment system for a vehicle are provided that enable the vehicle to receive desirable power even from power transmission devices embedded at varying embedment depths. The vehicle height adjustment method is for a vehicle including: a power reception device corresponding to a power transmission device embedded in a road; and a vehicle height adjustment device that adjusts the height of the vehicle above the road. The method includes: a transmitting-side inverter voltage detection step of detecting a transmitting-side inverter voltage of the power transmission device; a coupling coefficient calculation step of calculating a coupling coefficient between the power transmission device and the power reception device, the coupling coefficient corresponding to the transmitting-side inverter voltage; and a vehicle height adjustment step of driving the vehicle height adjustment device to achieve a vehicle height corresponding to the coupling coefficient.

## Description

### TECHNICAL FIELD

The present invention relates to a vehicle height adjustment method and a vehicle height adjustment system for a vehicle.

### BACKGROUND ART

Conventionally, as methods for charging a storage battery of a vehicle, charging by wired connection at home or a charging station, as well as contactless charging that involves electrically connecting a power transmission device embedded in the ground or a road to a corresponding power reception device, are known.

Various such contactless charging methods are known. For example, in a known contactless power transmission system as described in Patent Literature 1, a power transmission apparatus transmits electric energy to a power reception apparatus in a contactless manner. The power reception apparatus includes a receiving-side antenna that receives power through electromagnetic coupling. The power transmission apparatus includes: a transmitting-side antenna that transmits power to the receiving-side antenna through the electromagnetic coupling; an alternating current power driver that converts power received from a power source into alternating current power capable of transmission from the transmitting-side antenna to the receiving-side antenna; a transmission line that connects the alternating current power driver to the transmitting-side antenna to transmit the alternating current power; a detection circuit that detects a reflective characteristic of the transmission line; a matching circuit provided on the transmission line and in which an impedance is adjustable; a control circuit that adjusts, based on the reflective characteristic detected by the detection circuit, the impedance of the matching circuit to match an impedance of an entire system including the power transmission apparatus and the power reception apparatus; and a switching circuit that switches the transmission line to a path bypassing the matching circuit when the impedance of the matching circuit is adjusted. The control circuit includes an association unit that associates impedance candidates with reflective characteristics, detected by the detection circuit, of the transmission line bypassing the matching circuit. The impedance candidates include: impedance candidates of the transmission line; or impedance candidates of the matching circuit to be added to the respective impedance candidates of the transmission line for matching the impedance of the transmission line.

### Citation List

### Patent Literature

Patent Literature 1: Japanese Patent No. 5569182

### DISCLOSURE OF THE INVENTION

### PROBLEMS TO BE SOLVED BY THE INVENTION

However, conventional contactless charging methods as above pose the following problems. Because of the varying embedment depths of power transmission devices embedded in a road or the ground, even a vehicle keeping a constant power reception distance between the vehicle and the road surface fails to receive a desirable power. This prevents improvement in charging efficiency.

Further, with conventional contactless charging methods, the varying embedment depths cause variations in the power reception distance between the power transmission devices and the power reception device, as mentioned above. The variations may cause the inverter voltage of the power transmission devices to exceed a predetermined value, leading to malfunctions or power decline in the power transmission devices. Preventing such malfunctions or power decline in the power transmission devices necessitates setting low charging efficiency.

The present invention has been made for solving the above problems, and an object thereof is to provide a vehicle height adjustment method and a vehicle height adjustment system for a vehicle that enable the vehicle to receive desirable power even from power transmission devices embedded at varying embedment depths.

### MEANS FOR SOLVING THE PROBLEMS

A vehicle height adjustment method according to the present invention for solving the above problems is a vehicle height adjustment method for a vehicle including: a power reception device corresponding to a power transmission device embedded in a road; and a vehicle height adjustment device that adjusts a height of the vehicle above the road, the method being characterized by including: a transmitting-side inverter voltage detection step of detecting a transmitting-side inverter voltage of the power transmission device; a coupling coefficient calculation step of calculating a coupling coefficient between the power transmission device and the power reception device, the coupling coefficient corresponding to the transmitting-side inverter voltage; and a vehicle height adjustment step of driving the vehicle height adjustment device to achieve a vehicle height corresponding to the coupling coefficient.

A vehicle height adjustment system according to the present invention for solving the above problems is a vehicle height adjustment system for a vehicle, the system including: a power reception device corresponding to a power transmission device embedded in a road; and a vehicle height adjustment device that adjusts a height of the vehicle above the road, the system being characterized in that the vehicle height adjustment device includes a vehicle height control device that controls the height of the vehicle by calculating a predetermined vehicle height from a coupling coefficient between the power transmission device and the power reception device.

### EFFECTS OF THE INVENTION

With the vehicle height adjustment method and the vehicle height adjustment system according to the present invention, a coupling coefficient between the power transmission device and the power reception device is calculated. The vehicle height adjustment device is then driven to achieve a vehicle height corresponding to the calculated coupling coefficient. This enables the vehicle to be adjusted to the vehicle height capable of efficient power reception depending on the embedment state of the power transmission device, thereby improving the efficiency of contactless charging. When used for a running vehicle, the vehicle height adjustment method and the vehicle height adjustment system according to the present invention can also reduce air resistance due to the running.

### BRIEF DESCRIPTION OF THE DRAWINGS

[FIG. 1] FIG. 1 is a schematic diagram of a vehicle that incorporates a vehicle height adjustment system according to an embodiment of the present invention.
[FIG. 2] FIG. 2 is a side view for describing an outline of the vehicle height adjustment system according to the embodiment of the present invention.
[FIG. 3] FIG. 3 is a block diagram of the vehicle height adjustment system according to the embodiment of the present invention.
[FIG. 4] FIG. 4 is a graph illustrating the relationship between coupling coefficients and transmitting-side inverter voltages in the vehicle height adjustment system according to the embodiment of the present invention.
[FIG. 5] FIG. 5 is a graph illustrating the relationship between coupling coefficients and vehicle heights in the vehicle height adjustment system according to the embodiment of the present invention.
[FIG. 6] FIG. 6 is a flowchart for describing a vehicle height adjustment method according to the embodiment of the present invention.

### MODE FOR CARRYING OUT THE INVENTION

An embodiment of a vehicle height adjustment method and a vehicle height adjustment system according to the present invention will be described below with reference to the drawings. Note that the following embodiment is not intended to limit the invention set forth in the claims, and not all of the combinations of features described in the embodiment are essential for the solution in the invention.

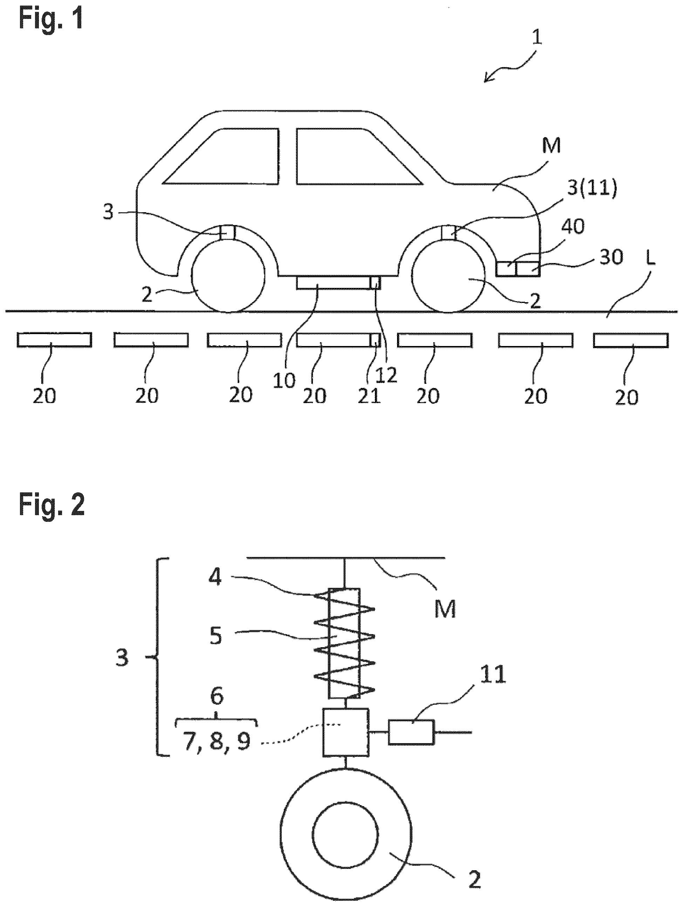

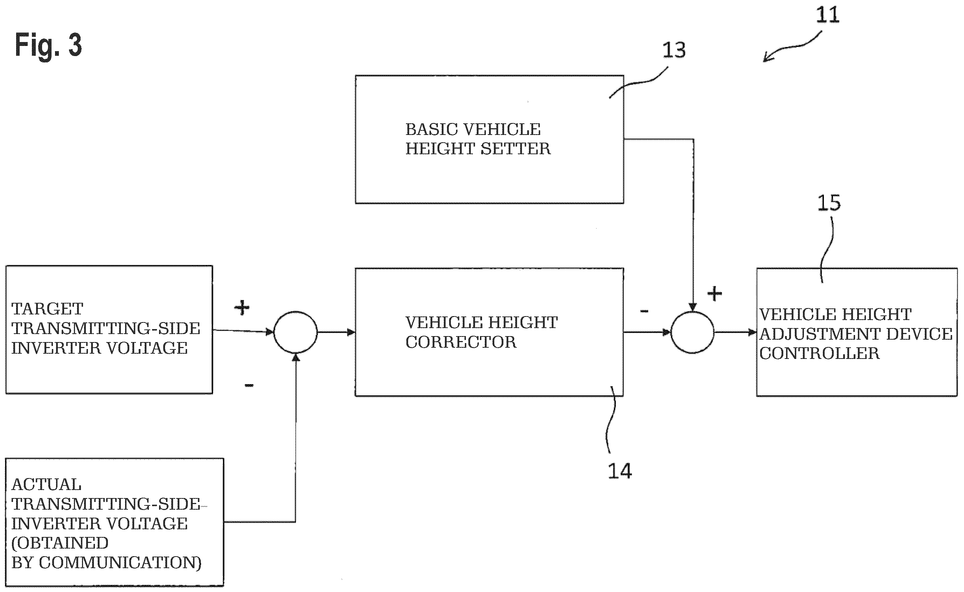

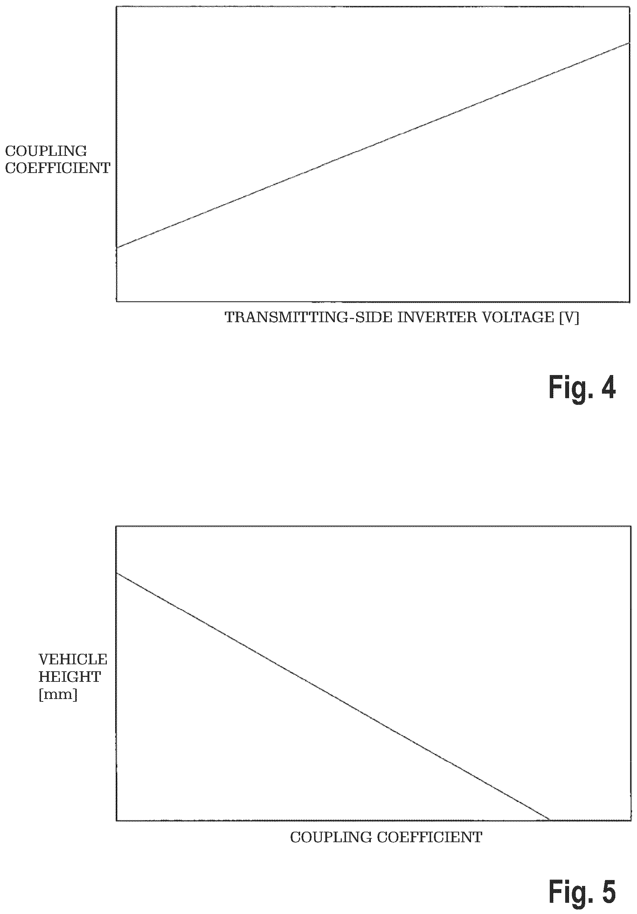

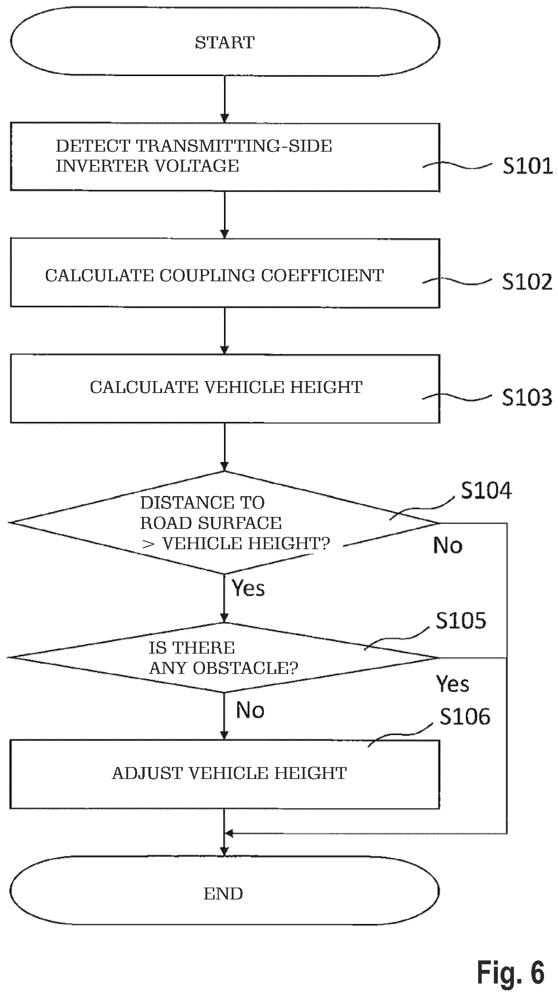

FIG. 1 is a schematic diagram of a vehicle that incorporates a vehicle height adjustment system according to an embodiment of the present invention. FIG. 2 is a side view for describing an outline of the vehicle height adjustment system according to the embodiment of the present invention. FIG. 3 is a block diagram of the vehicle height adjustment system according to the embodiment of the present invention. FIG. 4 is a graph illustrating the relationship between coupling coefficients and transmitting-side inverter voltages in the vehicle height adjustment system according to the embodiment of the present invention. FIG. 5 is a graph illustrating the relationship between coupling coefficients and vehicle heights in the vehicle height adjustment system according to the embodiment of the present invention. FIG. 6 is a flowchart for describing a vehicle height adjustment method according to the embodiment of the present invention.

As shown in FIG. 1, a vehicle height adjustment system 1 according to this embodiment is preferably used when a vehicle M is charged in a contactless manner while running in a contactless-charging driving lane provided in a road such as an expressway. The system includes a power reception device 10 corresponding to power transmission devices 20 embedded in a road L, and vehicle height adjustment devices 3 that adjust the vehicle height above the road L. Each vehicle height adjustment device 3 includes a vehicle height control device 11 that controls the vehicle height by calculating a predetermined vehicle height from a coupling coefficient between each power transmission device 20 and the power reception device 10. The vehicle height herein refers to the minimum height above ground from the lowest position of the vehicle M to the surface of the road L, which is the distance from the center of the bottom surface of the power reception device 10 to the surface of the road L in this embodiment.

The power transmission devices 20 are embedded at a predetermined depth in the road L and at predetermined intervals across a predetermined section of the road L. Each power transmission device 20 may be a conventionally known power transmission device, for example one including a coil with a winding axis substantially perpendicular to the surface of the road L, and a transmitting-side inverter device (not shown) that powers the coil. Each power transmission device 20 can communicate its transmitting-side inverter voltage to the vehicle M via a transmitting-side communication device 21.

The vehicle M and the transmitting-side communication device 21 may communicate with each other using various conventionally known communication devices, preferably those that conform with vehicle-to-vehicle communication standards or the 5G standard, for example. Communication devices that communicate wirelessly in this manner can eliminate the need for additional installation such as wiring, reducing the infrastructural cost.

The power reception device 10 is attached to the vehicle M to correspond to the power transmission devices 20 embedded in the road L, preferably on the surface of the vehicle M that faces the road L. The power reception device 10 includes a coil with a winding axis substantially parallel to the winding axis in each power transmission device 20. A storage battery in the vehicle M is charged with an induced electromotive force generated by mutual induction between each power transmission device 20 and the power reception device 10.

The power reception device 10 also includes a receiving-side communication device 12 corresponding to the transmitting-side communication device 21. The receiving-side communication device 12 is used to obtain the transmitting-side inverter voltage of each power transmission device 20.

A road surface detection device 30 and an obstacle detection device 40 are provided on the front of the vehicle M to detect the height of the surface of the road L and the presence of any obstacle on the road. The road surface detection device 30 may preferably be a ranging sensor capable of measuring the distance from the underbody of the vehicle M to the road surface. The obstacle detection device 40 may preferably be a sensor capable of detecting any obstacle within a predetermined range ahead of the vehicle M. These sensors may be various conventionally known sensors, such as ultrasonic sensors, optical sensors, or radio wave sensors.

The vehicle height adjustment devices 3, provided for the respective wheels 2 of the vehicle M, can adjust the attitude of the vehicle M to a predetermined state.

As shown in FIG. 2, each vehicle height adjustment device 3 is attached between the corresponding wheel 2 and the vehicle body to dampen vibrations and impacts input from the road surface and ensure driving stability. Each vehicle height adjustment device 3 includes a spring 4, a shock absorber 5, and an actuator 6.

The spring 4, which is a compression coil spring, supports the vehicle weight and changes its stiffness to determine the amounts of tilt of the body of the running vehicle in the longitudinal and lateral directions. The spring 4 extends and compresses in accordance with asperities of the road surface to keep the wheel 2 in contact with the road surface.

The shock absorber 5 restricts the movements of the extending and compressing spring 4. The shock absorber 5 is disposed inside the spring 4 concentrically with the spring 4. The shock absorber 5 causes a motor of a driver 7 of the actuator 6 (to be described below) to function as a power generator and generates a damping force. Note that the shock absorber 5 in this embodiment is not limited to the above structure; instead, it may be a structure that generates a damping force using hydraulic oil filling the shock absorber 5, and a piston movable upward and downward in the hydraulic oil.

The actuator 6 increases or decreases the overall length of the vehicle height adjustment device 3 to change the interval between the wheel 2 and the vehicle body, thereby adjusting the height of the vehicle body above ground. As an example, the actuator 6 includes a driver 7, a screw shaft 8, and a nut 9.

The driver 7 includes a motor controlled by signals from the vehicle height control device 11 (to be described below), and a gear that transmits motive power of the motor to the screw shaft 8.

The screw shaft 8 connects to the axial center of the shock absorber 5 and extends coaxially with the shock absorber 5. The screw shaft 8 has a male thread, such as a trapezoidal thread, on its outer surface. The screw shaft 8 is supported by a whirl-stop mechanism with respect to the body of the actuator 6 to be prevented from rotation and to be movable along the axis direction.

The nut 9 is disposed to surround the screw shaft 8. The nut 9 has a female thread, such as a trapezoidal thread, on its inner surface, capable of engaging with the male thread of the screw shaft 8. The nut 9 is rotated about the axis by motive power of the motor of the driver 7 transmitted via the gear. The nut 9 is supported via a part such as a bearing with respect to the body of the actuator 6 to be rotatable about the axis and to be prevented from moving along the axis direction.

The vehicle height adjustment device 3 configured as above can increase and decrease its overall length through operations to be described below.

As the motor of the driver 7 is rotated by a signal from the vehicle height control device 11, the gear connected to the output shaft of the motor rotates the nut 9. Because the screw shaft 8 engaging with the nut 9 is prevented from rotation by the whirl-stop mechanism, the screw shaft 8 moves upward or downward along the axis direction in accordance with the rotational direction of the nut 9. The shock absorber 5 connected to the screw shaft 8 moves upward or downward along with the screw shaft 8, resulting in an increase or decrease in the overall length of the vehicle height adjustment device 3.

The above description illustrates the screw shaft 8 screwed into the nut 9 by a mechanism such as a ball screw. However, other mechanisms may also be used, such as a trapezoidal screw in which many balls capable of rolling motions are interposed between the thread groove of the screw shaft 8 and the thread groove of the nut 9.

The above description illustrates the structure in which the shock absorber 5 is connected to the screw shaft 8, and the nut 9 is rotated to move the screw shaft 8 upward or downward, thereby increasing or decreasing the overall length of the vehicle height adjustment device 3. Other structures may also be used to increase or decrease the overall length of the vehicle height adjustment device 3. In one such structure, the shock absorber 5 may be connected to the nut 9, and the driver 7 may rotate the screw shaft 8 to move the nut 9 upward or downward. In this case, the nut 9 is supported by a whirl-stop mechanism with respect to the body of the actuator 6 to be prevented from rotation and to be movable along the axis direction, whereas the screw shaft 8 is supported via a part such as a bearing with respect to the body of the actuator 6 to be rotatable about the axis and to be prevented from moving along the axis direction.

The above description illustrates the structure in which the driver 7 includes the gear that transmits the motive power of the motor to rotate the screw shaft 8 or the nut 9. Other structures may also be used to rotate the screw shaft 8 or the nut 9, such as a hollow shaft motor that directly rotates the screw shaft 8 or the nut 9.

Now, with reference to FIG. 3, the vehicle height control device 11 will be described. The vehicle height control device 11 includes a microprocessor serving as a control device and is operated by power supply from a battery (not shown). The vehicle height control device 11 includes the following components: a basic vehicle height setter 13 that sets the basic height of the running vehicle; a vehicle height corrector 14 that corrects the basic vehicle height to a vehicle height for charging; and a vehicle height adjustment device controller 15 that controls the vehicle height adjustment devices 3 to set the vehicle height to the corrected vehicle height.

The basic vehicle height setter 13 may set the vehicle height as appropriate depending on properties, such as the shape and the weight, of the vehicle M. For example, the vehicle height may preferably be set within the range from 90 mm to 460 mm.

The vehicle height corrector 14 detects a transmitting-side inverter voltage to correct the vehicle height when a determination device (not shown) determines that the vehicle M is running in a contactless-charging driving lane to be charged in a contactless manner. Specifically, the vehicle height corrector 14 compares a target transmitting-side inverter voltage (e.g., 600 V) and an actual transmitting-side inverter voltage (e.g., 580 V) obtained by the receiving-side communication device 12 from the transmitting-side communication device 21 through wireless communication. The vehicle height corrector 14 then calculates a correction amount for the vehicle height required to achieve a vehicle height corresponding to the obtained transmitting-side inverter voltage.

The vehicle height adjustment device controller 15 drives the vehicle height adjustment devices 3 to achieve the vehicle height corrected in accordance with the correction amount calculated by the vehicle height corrector 14. Note that the basic vehicle height setter 13, the vehicle height corrector 14, and the vehicle height adjustment device controller 15 may preferably be configured as a program for performing these process steps in the vehicle height control device 11.

Now, the relationship between the transmitting-side inverter voltage and the vehicle height will be described. As illustrated in FIG. 4, it is known that, as the transmitting-side inverter voltage increases, the coupling coefficient between the power transmission device 20 and the power reception device 10 decreases. It is also known that the coupling coefficient and the vehicle height are in a relationship as illustrated in FIG. 5. Combining FIG. 4 and FIG. 5, the vehicle height adjustment system 1 according to this embodiment changes the voltage of the vehicle height adjustment devices 3 so that the vehicle height corresponding to the obtained transmitting-side inverter voltage is achieved.

Specifically, the target transmitting-side inverter voltage may be 600 V, whereas the actual transmitting-side inverter voltage obtained by the receiving-side communication device 12 through communication may be 580 V. The vehicle height corrector 14 then adjusts the vehicle height to compensate for 20 V. More specifically, as shown in FIG. 4, the coupling coefficient corresponding to the transmitting-side inverter voltage 580 V is approximately 0.18, which is calculated by a coupling coefficient calculation device.

As shown in FIG. 5, the vehicle height corresponding to the coupling coefficient 0.18 is approximately 170 mm. The vehicle height corrector 14 calculates a correction amount to achieve the vehicle height 170 mm from the basic vehicle height set by the basic vehicle height setter 13.

The correction amount is then sent to the vehicle height adjustment device controller 15, which drives the vehicle height adjustment devices 3 to set the vehicle height to the corrected vehicle height.

Now, with reference to FIG. 6, operations of the vehicle height adjustment system according to this embodiment will be described. Operations of the vehicle height adjustment system according to this embodiment begin when a determination device (not shown) determines that the vehicle M is running in a contactless-charging driving lane that offers contactless charging.

First, the receiving-side communication device 12 of the vehicle M obtains a transmitting-side inverter voltage of a power transmission device 20 embedded in the road L by receiving a signal transmitted from the transmitting-side communication device 21 (S101).

A coupling coefficient corresponding to the transmitting-side inverter voltage obtained by the above communication is calculated with reference to the graph in FIG. 4 (S102). Then, a vehicle height corresponding to the calculated coupling coefficient is calculated with reference to the graph in FIG. 5 (S103).

The calculated vehicle height is compared with the distance to the road surface obtained by the road surface detection device 30 attached to the vehicle M (S104). If the comparison indicates that the calculated vehicle height is greater than the distance to the road surface, setting the vehicle to the calculated vehicle height would cause the power reception device 10 to contact the road surface. The vehicle height adjustment system therefore terminates the operations without adjusting the vehicle height. This can prevent damaging or breaking the power reception device 10.

If, conversely, the distance to the road surface is greater than the calculated vehicle height, the obstacle detection device 40 attached to the front of the vehicle M determines whether any obstacle is on the road. If the obstacle detection device 40 detects an obstacle exceeding a predetermined height, setting the vehicle to the calculated vehicle height would cause the power reception device 10 to collide with the obstacle. The vehicle height adjustment system therefore terminates the operations without adjusting the vehicle height. This can prevent damaging or breaking the power reception device 10.

If no such obstacle is on the road, the vehicle height control device 11 in each vehicle height adjustment device 3 sends a driving signal to achieve the calculated vehicle height, so that the vehicle height adjustment device 3 adjusts the vehicle height to a predetermined vehicle height (S106).

Note that if the battery of the vehicle remains fully charged due to a situation such as traffic congestion, the vehicle height adjustment system according to this embodiment is preferably controlled to avoid sending a communication request to the transmitting-side communication device 21. In this manner, controlling the system to obtain the transmitting-side inverter voltage upon a request from the vehicle M can improve the energy efficiency.

Thus, the vehicle height adjustment system and the vehicle height adjustment method according to this embodiment as configured above involve setting a vehicle height corresponding to a coupling coefficient that depends on a transmitting-side inverter voltage. Contactless charging can therefore rely on the most efficient coupling coefficient corresponding to the received transmitting-side inverter voltage. This enables adjusting the vehicle height to a height that reflects the voltage limit of the power transmission devices 20, as well as improving the charging efficiency limited by road asperities and vehicle vibrations. The ability to adjust the vehicle height based on the transmitting-side inverter voltage of the power transmission devices 20 enables efficient charging without being affected by the embedment state of the power transmission devices 20.

The above embodiment illustrates contactless charging for the vehicle M running in a contactless-charging driving lane provided in a road. Alternatively, the vehicle height adjustment system and the vehicle height adjustment method according to this embodiment may be applied to contactless charging for the vehicle M standing still in a contactless charging area. Further, the system and method may be applied to not only vehicles but also electric moving bodies such as small mobilities and delivery robots. It is apparent from the description of the claims that such modifications and alterations to the system and method may fall within the technical scope of the present invention.

### REFERENCE NUMERALS

- 3: vehicle height adjustment device
- 10: power reception device
- 11: vehicle height control device
- 30: road surface detection device
- 40: obstacle detection device
- M: vehicle
- L: road
- S101: transmitting-side inverter voltage detection step
- S102: coupling coefficient calculation step
- S103: vehicle height adjustment step
- S104: road surface detection step
- S105: obstacle detection step

## Claims

1. A vehicle height adjustment method for a vehicle including: a power reception device corresponding to a power transmission device embedded in a road; and a vehicle height adjustment device that adjusts a height of the vehicle above the road, the method being **characterized by** comprising:
a transmitting-side inverter voltage detection step of detecting a transmitting-side inverter voltage of the power transmission device;
a coupling coefficient calculation step of calculating a coupling coefficient between the power transmission device and the power reception device, the coupling coefficient corresponding to the transmitting-side inverter voltage; and
a vehicle height adjustment step of driving the vehicle height adjustment device to achieve a vehicle height corresponding to the coupling coefficient.

2. The vehicle height adjustment method according to claim 1, **characterized by** comprising a road surface detection step of detecting a surface of the road.

3. The vehicle height adjustment method according to claim 1 or 2, **characterized by** comprising an obstacle detection step of detecting an obstacle on the road.

4. The vehicle height adjustment method according to claim 1 or 2, **characterized in that** the transmitting-side inverter voltage is obtained by wireless communication with the power transmission device.

5. The vehicle height adjustment method according to claim 4, **characterized in that** the transmitting-side inverter voltage detection step comprises obtaining the transmitting-side inverter voltage upon a request from the vehicle.

6. A vehicle height adjustment system for a vehicle, the system comprising: a power reception device corresponding to a power transmission device embedded in a road; and a vehicle height adjustment device that adjusts a height of the vehicle above the road, the system being **characterized in that**
the vehicle height adjustment device includes a vehicle height control device that controls the height of the vehicle by calculating a predetermined vehicle height from a coupling coefficient between the power transmission device and the power reception device.
